(19) Europäisches Patentamt / European Patent Office / Office européen des brevets

(11) **EP 4 377 757 B1**

(12) **FASCICULE DE BREVET EUROPEEN**

(45) Date de publication et mention de la délivrance du brevet:
**13.05.2026 Bulletin 2026/20**

(21) Numéro de dépôt: **22758425.7**

(22) Date de dépôt: **22.07.2022**

(51) Classification Internationale des Brevets (IPC):
**G05B 19/418** *(2006.01)*     **G06N 3/08** *(2023.01)*
**G06T 7/00** *(2017.01)*     **H05K 13/08** *(2006.01)*

(52) Classification Coopérative des Brevets (CPC):
**G05B 19/41875; G06N 3/045; G06N 3/09; G06T 7/001;** G05B 2219/32177; G06N 3/088; G06T 2207/30141

(86) Numéro de dépôt international:
**PCT/EP2022/070697**

(87) Numéro de publication internationale:
**WO 2023/006627 (02.02.2023 Gazette 2023/05)**

(54) **PROCEDE POUR LA DETECTION AUTOMATIQUE DE DEFAUTS SUR DES COMPOSANTS D'UNE CARTE ELECTRONIQUE**

VERFAHREN ZUR AUTOMATISCHEN ERKENNUNG VON DEFEKTEN IN BAUELEMENTEN EINER LEITERPLATTE

METHOD FOR AUTOMATICALLY DETECTING DEFECTS IN THE COMPONENTS OF A CIRCUIT BOARD

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **27.07.2021 FR 2108162**

(43) Date de publication de la demande:
**05.06.2024 Bulletin 2024/23**

(73) Titulaire: **SNCF Voyageurs**
**93200 Saint-Denis (FR)**

(72) Inventeurs:
• GOUDARD, Sylvain
  69150 DECINES-CHARPIEU (FR)
• GRENIER, Thomas
  69100 VILLEURBANNE (FR)

(74) Mandataire: **IPAZ**
**Parc Les Algorithmes**
**Bâtiment Platon**
**91190 Saint Aubin (FR)**

(56) Documents cités:
US-A1- 2018 276 811

• CHEONG LEONG KEAN ET AL: "Defects and Components Recognition in Printed Circuit Boards Using Convolutional Neural Network", INTERNET, vol. 547, 1 January 2019 (2019-01-01), pages 75 - 81, XP009534425, ISSN: 1876-1100, ISBN: 978-94-017-8798-7, Retrieved from the Internet <URL:http://link.springer.com/10.1007/978-981-13-6447-1_10> [retrieved on 20190402], DOI: 10.1007/978-981-13-6447-1_10
• SHAMS UR REHMAN ET AL: "Automated PCB identification and defect-detection system (APIDS)", INTERNATIONAL JOURNAL OF ELECTRICAL AND COMPUTER ENGINEERING (IJECE), 1 February 2019 (2019-02-01), pages 297 - 306, XP055904978, Retrieved from the Internet <URL:https://d1wqtxts1xzle7.cloudfront.net/63905279/33_25Jun18_12Apr_12657_KaFeiThang_edit_mita20200713-31894-1okz8q7-with-cover-page-v2.pdf?Expires=1648124914&Signature=LyWWMFmHs-2MA5lzkhi350Gm5hrlU8SwT1sak3Xn6eqSJeftWdLpPcfj32Rz7YxSuVv768ndclTkYgkNGr7NNFocFLxkXOnA20PwlQoko3CrjgyOHcAVqdRc44YNSCLOjNroqAe>[retrieved on 20220324]

**Description**

**Domaine technique**

La présente invention concerne un procédé pour la détection automatique de défauts sur des composants d'une carte électronique. Elle concerne également un dispositif informatique mettant en œuvre un tel procédé.
Le domaine de l'invention est celui de la détection autonome de défauts sur des composants de carte électrique.

**Etat de la technique**

On connaît des procédés de détection de défauts sur une carte électronique. Ces procédés sont fonctionnels mais posent des problèmes :

- d'automatisation. En effet, ces procédés nécessitent, pour chaque carte électronique devant d'être vérifiée, une intervention d'un opérateur pour détecter et identifier les défauts ;

  - de précision car même si un opérateur intervient, ce dernier utilise des filtres ou des masques pour mettre visuellement en avant les défauts. La précision de détection dépend ainsi des filtres utilisés et aussi du « jugement » de l'opérateur, c'est-à-dire en particulier de sa concentration et de sa compétence. Oublier d'utiliser un filtre particulier peut donc conduire à des erreurs et/ou à des absences de détection de défauts ;

- de facilité car le procédé pour détecter les défauts peut être plus ou moins facile à mettre en œuvre par un opérateur qui participe nouvellement à la détection de défauts ; et
- de temps de réalisation car comme les étapes de détection nécessitent une intervention d'un opérateur et des opérations manuelles, le temps de mise en œuvre dudit procédé peut dépendre de l'opérateur et de sa facilité à détecter visuellement les défauts. Par conséquent, le temps de réalisation dudit procédé, pour chaque carte électronique vérifiée, peut varier et être fastidieux. Cela peut en outre inciter des industriels à ne pas réaliser de telles étapes, entraînant ainsi une diminution de la qualité moyenne des cartes.

Ainsi, les machines d'inspection optique automatique conventionnelles nécessitent d'être programmées spécifiquement en fonction d'un type de carte électronique et, lors de sa mise en œuvre, une vérification des résultats d'analyse doit être faite par un opérateur afin de donner une sanction.
US 2018/0276811 A1 divulgue un procédé de détection de défauts sur une carte électronique en deux étapes.
CHEONG LEONG KEAN ET AL: "Defects and Components Recognition in Printed Circuit Boards Using Convolutional Neural Network" divulgue un procédé de détection de défauts sur une carte électronique impliquant un réseau de neurones.
Un but de la présente invention est de remédier à au moins un des inconvénients précités.
Un autre but de l'invention est de procurer un procédé pour la détection et/ou l'identification automatique de différents types de défauts sur des composants d'une carte électronique qui soit plus autonome et qui ne dépende pas d'un savoir-faire humain.
Un autre but de l'invention est de procurer un procédé pour la détection et/ou l'identification automatique de défauts sur des composants d'une carte électronique qui soit plus précis et/ou paramétrable en fonction de critères d'acceptabilité de défauts.
Un autre but de l'invention est de procurer un procédé pour la détection et/ou l'identification automatique de défauts sur des composants d'une carte électronique qui soit plus facile à mettre en œuvre.
Un autre but de l'invention est de procurer un procédé pour la détection et/ou l'identification automatique de défauts sur des composants d'une carte électronique qui soit plus rapide.
Un autre but de l'invention est de procurer un procédé pour la détection et/ou l'identification automatique de défauts sur des composants d'une carte électronique sans qu'il soit nécessaire de connaitre a priori leur implantation sur la carte électronique.

**Exposé de l'invention**

L'invention permet d'atteindre au moins un des buts précités par un procédé selon la revendication 1.
Ainsi le procédé selon l'invention utilise des étapes entièrement automatisées qui ne nécessitent pas l'intervention, ni le savoir-faire d'un opérateur. Le procédé est donc plus autonome.
Ensuite, les étapes d'analyse du procédé selon l'invention utilisent toutes les deux un modèle autonome et qui ne nécessite aucune intervention d'un opérateur. Par conséquent, le procédé selon l'invention est plus précis, plus facile à mettre en œuvre et plus rapide.

En outre, l'acquisition d'une image d'ensemble et d'une image détaillée favorise sa facilité de mise en œuvre et sa rapidité de mise en œuvre. En particulier, l'image d'ensemble peut être de qualité plus faible que l'image détaillée car elle est utilisée pour la détection de composants. A l'inverse, l'image détaillée se focalise sur un composant, ce qui permet de vérifier facilement et rapidement la présence de défauts sur ce composant.

De manière générale, le procédé de l'invention permet de détecter des défauts sur des composants sans qu'il soit nécessaire de connaître la carte analysée.

L'image d'ensemble peut correspondre à une image acquise à l'aide d'un moyen d'acquisition tel qu'une caméra ou un appareil photo, ou résulter d'une reconstitution de plusieurs images acquises avec un tel moyen d'acquisition puis assemblées.

Le procédé peut comprendre une étape de communication des défauts ou du résultat de l'étape d'analyse par le deuxième modèle. Cette communication peut consister en, ou comprendre, une liste des défauts avec leur position et/ou leur nom et/ou leur acceptabilité dans un tableau, si par exemple des défauts sont détectés à l'étape d'analyse par le deuxième modèle.

La liste des défauts peut être adaptée ou filtrée en fonction d'un objectif de qualité relatif à la carte analysée. Autrement dit, des critères de détection des défauts, plus ou moins forts selon un niveau d'acceptabilité attendu, peuvent être utilisés, en particulier lors de l'étape d'analyse de l'image détaillée par le deuxième modèle.

A titre d'exemple non limitatif, trois niveaux ou classes d'acceptabilité peuvent être utilisés, un premier niveau très permissif (classe n°1), un deuxième niveau moyennement permissif (classe n°2) et un troisième niveau non permissif (classe n°3). Le choix de la classe peut être réalisé en fonction de l'usage de la carte. Par exemple, une carte destinée à équiper un objet non critique peut être contrôlée selon des critères du premier niveau (classe n°1) tandis qu'une carte destinée à un équipement critique ou sécuritaire peut être contrôlée selon des critères du troisième niveau (classe n°3). De manière non limitative, le système de classification des types et acceptabilités des défauts peut être établi suivant la norme « IPC-A-610 », bien connue dans le domaine des assemblages électroniques.

Le procédé selon l'invention peut envoyer un message à un dispositif informatique, par exemple un message positif si aucun défaut n'est détecté ou un message négatif si au moins un défaut est détecté.

En cas d'identification d'un ou plusieurs défauts, le procédé peut comprendre une étape de recherche complémentaire ciblée.

L'étape d'analyse par le premier modèle peut comprendre :

- une étape d'identification d'au moins un composant de ladite carte électronique, et
- pour chaque composant identifié, une étape de fourniture de l'au moins une position dudit composant.

Ainsi, suivant le procédé selon l'invention, l'image d'ensemble est analysée par le premier modèle qui va détecter des composants « d'intérêts » sur ladite carte et pour chaque composant détecté, une position est fournie par ledit premier modèle. Ainsi, le procédé selon l'invention est capable de détecter différents composants sur une carte électronique. En outre, il est capable de sélectionner des composants d'intérêts parmi d'autres composants. De telles étapes favorisent l'autonomie dudit procédé, sa facilité de mise en œuvre et sa précision.

La sélection de composants d'intérêt peut être réalisée par création d'une représentation de l'image d'ensemble sous forme d'une image du type « carte thermique » mettant en évidence des zones de l'image de manière à permettre au modèle de prendre une décision de classification pour ce ou ces composants d'intérêt.

L'image d'ensemble peut être de préférence une image de ladite carte électronique en entier ou une image d'une partie de ladite carte électronique.

Ainsi, le procédé selon l'invention n'est pas limité à une image d'ensemble en particulier. Le procédé selon l'invention peut fonctionner avec des images d'ensemble de différentes tailles, et en outre, il peut travailler avec différentes formes de cartes électroniques. Le procédé est donc fonctionnel à partir d'une image d'une partie de carte électronique comprenant au moins un composant. Cette caractéristique améliore la facilité de mise en œuvre et l'adaptation dudit procédé à différentes tailles et formes de carte électronique.

L'image détaillée peut être une image de l'au moins un composant en entier ou une image d'une partie de l'au moins un composant.

Ainsi, le procédé selon l'invention n'est pas limité à une image détaillée en particulier. Le procédé selon l'invention peut s'adapter à différentes images, différentes tailles, et différentes formes de composants et de boîtiers intégrant de tels composants. Le procédé est donc fonctionnel à partir d'une image d'une partie de composant. Cette caractéristique améliore la facilité de mise en œuvre et l'adaptation dudit procédé à différentes tailles et formes de composant.

Dans une variante, le procédé selon l'invention peut vérifier plusieurs cartes électroniques simultanément.

La position d'au moins un composant peut comprendre la position d'un microcontrôleur et/ou la position d'un composant passif et/ou la position d'un processeur de signal numérique présent(s) sur ladite carte électronique.

Ainsi, le procédé est capable de détecter une pluralité de composants de différentes natures. Ceci améliore l'efficacité et l'autonomie dudit procédé.

L'étape d'analyse par le deuxième modèle peut être agencée pour détecter des défauts, par exemple parmi des ponts, des brasures sèches, des défauts de surface, des polluants, et/ou leur acceptabilité, sur l'au moins un composant de ladite carte électronique.

Ainsi, le procédé est capable de détecter une pluralité de défauts sur des composants de différentes natures ou de même nature. Ceci améliore l'efficacité et l'autonomie dudit procédé.

En associant par exemple des types de défauts à certains types de composants, la détection d'un composant d'un type donné permet de rechercher un ou plusieurs types de défauts associés à ce type de composant. Il est ainsi possible d'améliorer le niveau de connaissance des défauts les plus fréquents pour chacun des types de composants choisis. Cela permet notamment d'améliorer la qualité de la détection en fonction des défauts les plus fréquents ou encore de choisir un niveau d'analyse, par exemple une analyse complète consistant à rechercher tous les types de défauts associés au composant analysé ou une analyse rapide en recherchant uniquement les types de défauts les plus fréquents associés à ce composant.

Le procédé suivant l'invention peut aussi détecter plusieurs défauts sur un même composant.

La position de l'au moins un composant peut comprendre des coordonnées cartésiennes de l'au moins un composant.

De cette manière l'acquisition de l'au moins une image détaillée est facilitée car elle est agencée pour imager ledit composant à ladite position.

Les coordonnées peuvent être exprimées suivant un repère défini par ladite carte électronique dans l'espace physique. Les coordonnées cartésiennes peuvent être extraites suivant des techniques connues de traitement d'image à partir de l'image d'ensemble, par exemple en utilisant une matrice de passage de type homographie reliant les coordonnées exprimées dans l'espace image (relatif à une position exprimée en coordonnées pixels) à celle d'un repère monde dans l'espace physique (i.e. espace réel).

Le premier modèle préalablement établi comprend un réseau de neurones entrainé de manière supervisée avec une base de données, dite base de données composants d'apprentissage, comprenant des images de composants appartenant à des cartes électroniques, ledit premier modèle prenant en entrée l'image d'ensemble.

Cette caractéristique améliore la précision, l'autonomie, la facilité et le temps de mise en œuvre de l'étape d'analyse de l'image d'ensemble.

Le deuxième modèle préalablement établi comprend un réseau de neurones entrainé de manière supervisée avec une base de données, dite base de données défauts d'apprentissage, comprenant des images de défauts préalablement répertoriés de composants, ledit deuxième modèle prenant en entrée une position d'au moins un composant.

Cette caractéristique améliore la précision, l'autonomie, la facilité et le temps de mise en œuvre de l'étape d'analyse de l'image détaillée.

Le premier modèle et/ou le deuxième modèle peuvent chacun être un réseau de neurones entrainé de manière supervisée ou de manière non-supervisée.

Ce modèle peut être préalablement établi ou il peut être établi par des étapes supplémentaires dudit procédé. Le procédé peut comprendre une phase préalable, dite première phase préalable, réalisée avant à ladite étape d'acquisition de l'image d'ensemble, comprenant des étapes suivantes :

- acquisition d'une multitude d'images d'ensemble de cartes électroniques comprenant au moins un composant,
- enregistrement desdites images d'ensemble sur une base de données, de préférence sur une base de données composant.

Ainsi le procédé suivant l'invention peut comprendre une création d'une base de données d'images imageant plusieurs composants. Ceci améliore la fiabilité dudit procédé car le premier modèle peut être directement entrainé à partir d'images de composants d'intérêts.

La première phase préalable peut en outre comprendre les étapes suivantes :

- répartition, de préférence de manière aléatoire, des images d'ensemble en deux groupes d'images appelés base de données d'apprentissage et base de données de test,
- identification, par un opérateur, des composants présents sur les cartes électroniques à partir des images appartenant à la base de données d'apprentissage,
- regroupement des composants identifiés dans différentes classes, appelées classes « composant », et
- conception du premier modèle entrainé à partir des classes composants et d'une fonction coût.

Ainsi, l'étape d'identification de la première phase préalable permet de déterminer les composants d'intérêts qui devront être détectés dans l'étape d'analyse de l'image d'ensemble. Les composants d'intérêts sont regroupés dans différentes classes, appelées classes « composant ». Chaque classe se rapporte à un composant d'intérêts de la carte électronique. Chaque classe peut donc comprendre plusieurs images différentes dudit composant.

Au moins une classe de type « composant » peut être générée suite à l'étape de regroupement de la première phase préalable.

Dans le présent document, un « composant » est un élément de la carte, tel qu'un composant électronique, un circuit imprimé, un connecteur, un câble, un élément de visserie, une étiquette, etc.

Plusieurs classes « composant » peuvent être ainsi créées en fonction des besoins dudit procédé. A titre d'exemple non limitatif, les classes de type « composant » peuvent comprendre ou consister en : une classe microcontrôleur (i.e. une classe de composant de type microcontrôleur), une classe composant passif (i.e. une classe de composant de type composant passif), une classe processeur de signal numérique (i.e. une classe de composant de type processeur de signal numérique). Bien entendu, ces classes peuvent évoluer en fonction des besoins dudit opérateur, c'est-à-dire qu'il peut y avoir plus ou moins de composants identifiés par l'opérateur et regroupés dans des classes.

Dans un mode de réalisation, le modèle peut être entraîné en utilisant des classes composants standards basées sur plusieurs boîtiers de composants normalisés. Un tel entrainement est potentiellement plus long mais permet d'améliorer la capacité de généralisation de la détection à d'autres composants et/ou cartes.

Par base de données de test, on entend un regroupement d'images n'ayant pas servi dans l'apprentissage supervisé d'un des modèles. Ces images sont donc inconnues par le premier ou deuxième modèle.

Le procédé peut comprendre une phase préalable, dite deuxième phase préalable, réalisée avant l'acquisition de ladite image détaillée, comprenant des étapes suivantes :

- acquisition d'une multitude d'images détaillées sur des cartes électroniques,
- enregistrement desdites images détaillées sur une base de données, de déférence sur une base de données défaut.

Optionnellement, l'acquisition de la multitude d'images détaillées peut mettre en œuvre une étape de reconstitution d'une ou plusieurs de ces images détaillées à partir de plusieurs sous-images, par exemple lorsque la caméra utilisée pour acquérir de telles sous-images ne permet pas d'acquérir en une seule fois une telle image.

Ainsi le procédé suivant l'invention peut comprendre une création d'une seconde base de données à partir d'images acquises. Ceci améliore la fiabilité dudit procédé car le deuxième modèle peut être directement entrainé à partir d'images de défauts d'intérêts.

Le procédé peut aussi être amélioré en utilisant une technique de multiplication de données telle que la technique connue sous l'appellation anglo-saxonne « data augmentation », notamment pour des défauts rares ou de grande variabilité.

La deuxième phase préalable peut en outre comprendre les étapes suivantes :

- répartition, de préférence de manière aléatoire, des images détaillées en deux groupes d'images appelés base de données d'apprentissage et base de données de test,
- identification, par un opérateur, de défauts d'intérêts présents dans les images détaillées appartenant à la base de données d'apprentissage,
- regroupement des défauts identifiés dans différentes classes, appelées classes « défaut »,
- conception du deuxième modèle entrainé à partir des classes « défaut » et d'une fonction coût.

Ainsi, l'étape d'identification de la deuxième phase préalable permet de déterminer les défauts d'intérêts qui devront être détectés dans l'étape d'analyse de l'image détaillée. Les défauts d'intérêts sont regroupés dans différentes classes, appelées classes « défaut ». Chaque classe se rapporte à un défaut d'intérêts sur des composants de la carte électronique. Chaque classe peut donc comprendre plusieurs images différentes dudit défaut.

Au moins une classe de type « défaut » peut être générée suite à l'étape de regroupement de la deuxième phase préalable.

Plusieurs classes de type « défaut » peuvent être ainsi créées en fonction des besoins dudit procédé. A titre d'exemple non limitatif, les classes de type « défaut » peuvent comprendre ou consister en : une classe pont (i.e. une classe de défaut de type pont), une classe polluant (i.e. une classe de défaut de type polluant), une classe brasure sèche (i.e. une classe de défaut de type brasure sèche), une classe défaut de surface (i.e. une classe de défaut de type défaut de surface). Bien entendu, ces classes peuvent évoluer en fonction des besoins dudit opérateur, c'est-à-dire qu'il peut y avoir plus ou moins de défauts identifiés par l'opérateur et regroupés dans des classes.

Pour un ou plusieurs desdits défauts, il est possible d'ajouter une sous-classification permettant de décrire l'acceptabilité de ce ou ces défauts.

Suivant le procédé selon l'invention, à chaque composant détecté à l'étape d'analyse de l'image d'ensemble, le procédé est agencé pour vérifier si ce composant présente au moins un des défauts répertoriés dans l'une des classes de type « défaut ».

Dans une variante du procédé selon l'invention, les classes de type « défaut » peuvent être associées à une classe particulière de composant. Par exemple, si un composant de type microcontrôleur est détecté à l'étape d'analyse, le procédé selon l'invention peut s'intéresser qu'à des défauts répertoriés sur le composant de type microcontrôleur.

Ainsi, suivant le procédé selon l'invention, le premier modèle et le deuxième modèle consistent chacun en un réseau de neurones. Ce réseau de neurones peut être un réseau de neurones déjà conçu ou être conçu dans une phase préliminaire. Dans le cas où le premier modèle ou le deuxième modèle n'est pas préalablement conçu, chaque modèle peut être entrainé par apprentissage supervisé. Dans une variante, le premier et/ou le deuxième modèle peuvent être entrainés par apprentissage non supervisé.

Par apprentissage supervisé, on entend un modèle qui apprend à classifier des images d'entrées en s'appuyant sur des exemples avec des réponses correctes.

Par apprentissage non supervisé, on entend un modèle qui apprend à classifier des images d'entrées par lui-même, les réponses correctes ne sont pas données. En particulier, le modèle classe les entrées en s'appuyant sur des similarités entre les différentes images d'entrées par « clustering » automatique.

Le premier modèle et/ou le deuxième modèle peuvent être chacun un réseau de neurones de type « feed-forward ». A titre d'exemples, les réseaux de neurones connus sous la dénomination « Yolo », « EfficientDet » ou encore « Yolact » peuvent être utilisés dans le cadre de la présente invention. Bien entendu, d'autres types de réseaux de neurones peuvent être conçus.

Après les étapes de conception du premier modèle et du deuxième modèle, le procédé peut comprendre une vérification de chaque modèle suivant différents critères.

Le procédé peut comprendre, préalablement aux étapes d'analyse, une phase de vérification du premier et du deuxième modèle comprenant les étapes suivantes :

- calcul de l'indice de Jaccard à partir d'images appartenant à ladite base de données « composant » et calcul d'un indice de Jaccard à partir d'images appartenant à ladite base de données « défaut », de préférence à partir d'images, dites de test, appartenant aux bases de données « composant » ou « défaut »,
- pour chaque indice de Jaccard calculé :

  ◦ calcul d'un facteur de détection, de non-détection et de fausse alarme, et
  ◦ calcul d'au moins une donnée de confiance fonction du facteur de prédiction, de non-détection et de fausse alarme.

Suivant le procédé :

- le facteur de détection peut comprendre les indices de Jaccard strictement supérieurs à 0,5 ;
- le facteur de non-détection peut comprendre les indices de Jaccard supérieurs à 0 et inférieurs ou égaux à 0,5 ; et
- le facteur de fausse alarme peut comprendre les indices de Jaccard égaux à 0.

L'au moins une donnée de confiance peut comprendre un facteur de sensibilité et un facteur relatif à une valeur prédictive, ledit facteur de sensibilité étant déterminé par la relation suivante :

[Math 1]

$$\text{Sensibilité} = \frac{\text{TP}}{\text{TP} + \text{FN}}$$

et ledit facteur relatif à une valeur prédictive positive étant déterminée par la relation suivante :

[Math 2]

$$\text{Valeur prédictive positive} = \frac{\text{TP}}{\text{TP} + \text{FP}}$$

avec TP se rapportant au facteur de bonne détection, FN se rapportant au facteur de non détection et FP se rapportant au facteur de fausse alarme.

Ainsi, si le premier modèle et le deuxième modèle sont entrainés de manière supervisée, le procédé selon l'invention peut comprendre une phase de vérification des performances de chaque modèle avant de les utiliser dans les étapes d'analyse du procédé selon l'invention.

Ces étapes permettent d'améliorer la robustesse et la fiabilité du procédé selon l'invention.

Bien entendu, la phase de vérification peut comprendre l'utilisation d'un ou d'une combinaison d'indices différents de celui de Jaccard, par exemple le score de Dice ou encore la distance de Hausdorff.

Dans une variante de réalisation, une ou plusieurs étapes d'acquisition et/ou de traitement d'image peuvent être réalisées dans un espace tridimensionnel.

Selon un autre aspect de l'invention, il est proposé un programme informatique comprenant des instructions exécutables par un dispositif informatique, qui lorsqu'elles sont exécutées, mettent en œuvre toutes les étapes du procédé selon l'invention.

Le programme informatique peut être dans tout langage informatique évolué tel que C++, C#, JAVA, Python, langage machine, etc., permettant de faire de la programmation orientée objet.

Selon un autre aspect de l'invention, il est proposé un dispositif informatique comprenant des moyens configurés pour mettre en œuvre toutes les étapes du procédé selon l'invention.

Le dispositif informatique selon l'invention confère les mêmes avantages que ceux énumérés pour le procédé selon l'invention.

Le dispositif informatique peut être un PC, un smartphone, une tablette, une unité de calcul ou tout autre appareil informatique et/ou électronique.

En particulier, le dispositif informatique peut être une carte électronique présentant au moins une composante analogique et/ou au moins une composante numérique.

Dans un mode de réalisation particulier, le dispositif informatique peut être un processeur, une puce, un calculateur, etc.

Dans un mode de réalisation, le dispositif informatique peut mettre en œuvre une méthode d'optimisation du type « informatique en périphérie », aussi connue sous la dénomination anglo-saxonne « edge computing ».

Plus généralement, le dispositif informatique est de préférence conçu de manière à limiter le transfert vers un serveur centralisé de données massives, en l'occurrence des images, afin de transférer essentiellement ou exclusivement des données de résultat.

Selon encore un autre aspect de l'invention, il est proposé un équipement pour la détection automatique de défauts sur des composants d'une carte électronique, caractérisé en ce qu'il comprend :

- un dispositif informatique comprenant des moyens configurés pour mettre en œuvre toutes les étapes du procédé selon l'invention,
- au moins un moyen d'acquisition agencé pour acquérir des images de ladite carte électronique et/ou des composants appartenant à ladite carte électronique.

L'équipement confère les mêmes avantages que ceux énumérés pour le procédé selon l'invention.

L'équipement peut comprendre un support de ladite carte électronique.

Le moyen d'acquisition peut être une caméra ou un appareil photo.

Le moyen d'acquisition utilisé pour l'acquisition de l'image d'ensemble et de l'image détaillée peut être similaire. En particulier, des réglages de la distance entre la carte électronique et le moyen d'acquisition, et/ou le facteur de zoom et/ou l'ouverture dudit moyen d'acquisition peut différer entre l'image d'ensemble et l'image détaillée.

Le moyen d'acquisition peut aussi être utilisé dans la première et deuxième phase préalable.

Dans une variante, l'équipement peut comprendre plusieurs moyens d'acquisition pour vérifier la présence de défauts sur plusieurs cartes électroniques simultanément. Par exemple, une caméra peut être associée à une carte électronique. Chaque moyen d'acquisition peut être robotisé de manière similaire.

Le moyen d'acquisition peut être mobile.

Par exemple, l'équipement peut comprendre un bras robotisé agencé pour déplacer ledit moyen d'acquisition à la position de l'au moins un composant.

La carte électronique peut être immobile et/ou en ce que l'au moins un composant de ladite carte électronique peut être immobile.

Dans une variante, la carte électronique peut être mobile.

De préférence, l'équipement, en particulier le dispositif informatique, intègre les modèles utilisés dans le procédé de détection pour réaliser les étapes d'analyse. Ces modèles peuvent être compressés.

## Brève description des figures

D'autres avantages et particularités de l'invention apparaîtront à la lecture de la description détaillée de mises en œuvre et de modes de réalisation nullement limitatifs, et des dessins annexés suivants.

[Fig. 1] est une représentation schématique d'un premier exemple de réalisation non limitatif d'un procédé selon l'invention ;

[Fig. 2] est une représentation schématique d'un deuxième exemple de réalisation non limitatif d'un procédé selon l'invention ;

[Fig. 3] est une représentation schématique d'un troisième exemple de réalisation non limitatif d'un procédé selon l'invention ;

[Fig. 4] est une représentation schématique d'un quatrième exemple de réalisation non limitatif d'un procédé selon l'invention ;

[Fig. 5] est une représentation schématique d'un exemple de réalisation non limitatif d'un dispositif selon l'invention ;

[Fig. 6] est une représentation schématique d'un exemple de réalisation non limitatif d'un équipement selon l'invention.

## Description détaillée de modes de réalisation

Sur les figures, les éléments communs à plusieurs figures conservent la même référence.

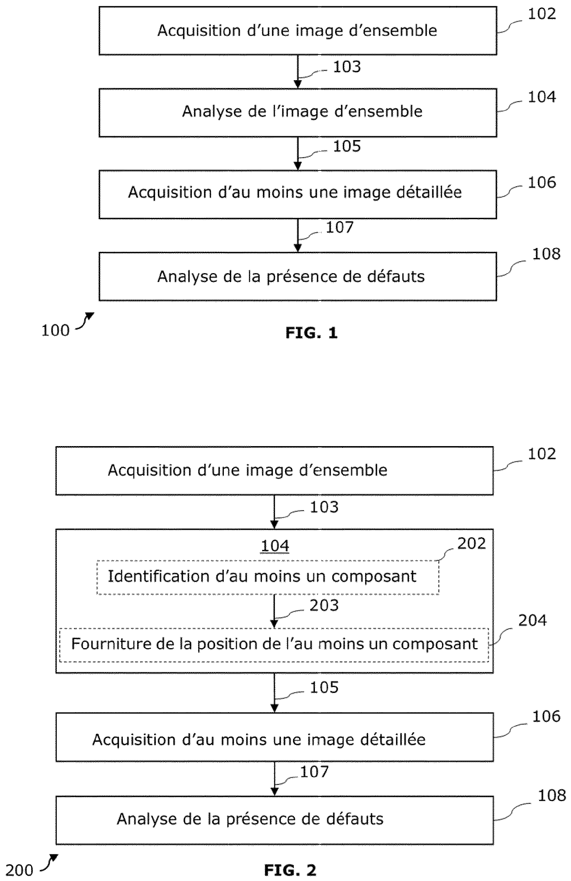

La FIGURE 1 est une représentation schématique d'un exemple de réalisation non limitatif d'un procédé 100 selon l'invention.

Le procédé 100 est mis en œuvre par ordinateur.

Le procédé 100 est un procédé pour la détection automatique de défauts sur des composants d'une carte électronique.

Le procédé 100 comprend une étape d'acquisition 102 d'une image 103, dite d'ensemble 103, de ladite carte électronique, ladite image d'ensemble 103 comprenant au moins un composant de ladite carte.

Le procédé 100 comprend ensuite une étape d'analyse 104, par un premier modèle préalablement établi, de ladite image d'ensemble 103 pour déterminer une position 105 d'au moins un composant de ladite carte électronique se trouvant sur ladite image d'ensemble.

Pour au moins une position déterminée 105, le procédé 100 comprend :

- une étape acquisition 106 d'au moins une image 107, dite image détaillée 107, dudit composant se trouvant à ladite position 105, et
- une étape d'analyse 108, par un deuxième modèle préalablement établi, de ladite image détaillée 107 pour déterminer la présence de défauts sur ledit composant.

Ainsi, le procédé 100, en particulier l'étape d'analyse par le premier modèle, fournit une position 105 pour chaque composant déterminé.

Le premier modèle préalablement établi est un réseau de neurones entrainé de manière supervisée avec une base de données, dite base de données « composant » d'apprentissage. Le premier modèle prend en entrée l'image d'ensemble 103. La base de données « composant » d'apprentissage comprend plusieurs images de composants appartenant à des cartes électroniques,

Le deuxième modèle préalablement établi est un réseau de neurones entrainé de manière supervisée avec une base de données, dite base de données « défaut » d'apprentissage. Le deuxième modèle prend en entrée la position des composants fournie en sortie de l'étape d'analyse 104 de l'image d'ensemble 103. La base de données « défaut » d'apprentissage comprend des images de défauts préalablement répertoriés de composants.

L'image d'ensemble 103 peut consister en une image entière de la carte électronique vérifiée par le procédé 100 ou elle peut consister en une image d'une partie de la carte électronique vérifiée par ledit procédé 100. L'image détaillée 107 peut consister en une image entière d'un composant de ladite carte électronique vérifiée par le procédé 100 ou elle peut consister en une image d'une partie d'un composant de la carte électronique vérifiée par ledit procédé 100.

La carte électronique vérifiée par le procédé 100 peut comprendre une multitude de composants. A titre d'exemple non limitatif, la carte électronique peut comprendre au moins un microcontrôleur, et/ou au moins un composant passif, et/ou au moins un processeur de signal numérique.

L'étape d'analyse 104 de l'image d'ensemble 103 peut détecter l'ensemble des composants de la carte électronique parmi un microcontrôleur, un composant passif, un processeur de signal numérique. Pour chaque composant de la carte électronique précédemment énuméré, ledit procédé 100 peut déterminer la position 105 de ces composants sur ladite carte électronique.

La position 105 de l'au moins un composant peut comprendre les coordonnées cartésiennes de l'au moins un composant. Ces données cartésiennes peuvent être données suivant un repère défini sur la carte électronique vérifiée par le procédé 100.

Les composants de la carte électronique peuvent comprendre plusieurs défauts parmi des ponts, des brasures sèches, des défauts de surface, des polluants.

L'étape d'analyse 108 par le deuxième modèle vérifie chaque composant pour lequel une position 105 est fournie suite à l'étape d'analyse 104 par le premier modèle. L'étape d'analyse 108 peut ainsi détecter les défauts précédemment énumérés sur chaque composant pour lequel une position 105 est fournie et/ou leur acceptabilité. Chaque composant peut comprendre plusieurs défauts. Le procédé 100 peut détecter plusieurs défauts sur un même composant.

Optionnellement, le procédé 100 peut comprendre une étape de communication du résultat de l'étape d'analyse 108. Par exemple, si l'étape d'analyse 108 par le deuxième modèle localise des défauts, ces défauts sont fournis par le procédé 100, par exemple sous la forme de message ou d'un tableau listant les défauts, leurs localisations et/ou leur acceptabilité, à un dispositif informatique. Dans le cas où le procédé 100 ne détecte pas de défaut sur la carte électronique, le procédé 100 peut envoyer un message positif à un dispositif informatique.

Quand l'étape d'analyse 108 par le deuxième modèle est terminée, le procédé 100 peut vérifier la présence de défauts sur une autre carte électronique.

La FIGURE 2 est une représentation schématique d'un exemple de réalisation non limitatif d'un procédé 200 selon l'invention.

Le procédé 200 comprend toutes les étapes du procédé 100 illustré en FIGURE 1. Par conséquent, seules les différences avec le procédé 100 seront décrites.

L'étape d'analyse 104 par le premier modèle du procédé 200 illustré en FIGURE 2 comprend une étape d'identification 202 d'au moins un composant de ladite carte électronique.

Pour chaque composant identifié à l'étape d'identification 202, l'étape d'analyse 104 comprend ensuite une étape de fourniture 204 de l'au moins une position 105 dudit composant.

Ainsi, suivant le procédé 200, une position 105 est fournie à chaque composant identifié à l'étape d'identification 202. Par conséquent, si plusieurs composants 203 sont identifiés, plusieurs positions 105 seront fournies suite à l'étape de fourniture 204.

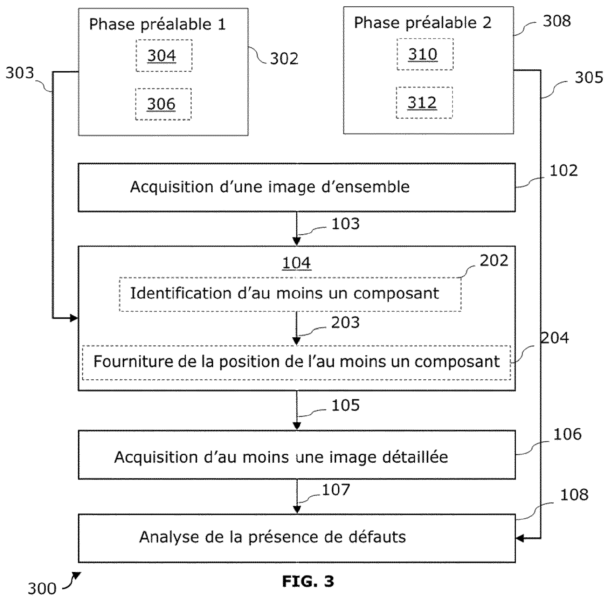

La FIGURE 3 est une représentation schématique d'un exemple de réalisation non limitatif d'un procédé 300 selon l'invention.

Le procédé 300 comprend toutes les étapes du procédé 200 illustré en FIGURE 2. Par conséquent, seules les différences avec le procédé 200 seront décrites.

Le procédé 300 comprend en outre une phase préalable 302, dite première phase préalable 302, réalisée avant ladite étape d'acquisition 102 de l'image d'ensemble 103.

La première phase préalable 302 comprend une étape d'acquisition 304 d'une multitude d'images d'ensemble de cartes électroniques comprenant au moins un composant. De préférence, les cartes électroniques imagées à l'étape d'acquisition 304 de la première phase préalable 302 comprennent au moins un composant parmi les composants : microcontrôleur, composant passif, processeur de signal numérique.

La première phase préalable 302 comprend en outre une étape d'enregistrement 306 des images d'ensemble précédemment acquises sur une base de données, appelée base de données « composant ».

Le procédé 300 comprend aussi une autre phase préalable 308, dite deuxième phase préalable 308, réalisée avant à ladite étape d'acquisition 102 de l'image détaillée 107, de préférence avant l'étape d'acquisition 102 de l'image d'ensemble 103.

La deuxième phase préalable 308 comprend une étape d'acquisition 310 d'une multitude d'images détaillées 107 sur des cartes électroniques. De préférence, les images détaillées des composants imagées à l'étape d'acquisition 312 de la deuxième phase préalable 308 comprennent au moins un défaut parmi les défauts suivants : ponts, brasures sèches, défauts de surface, polluants.

La deuxième phase préalable 308 comprend en outre une étape d'enregistrement 312 des images détaillées précédemment acquises sur une base de données, appelée base de données « défaut ».

La base de données « composant » peut servir à l'apprentissage du premier modèle 303. La base de données « défaut » peut servir à l'apprentissage du deuxième modèle 305.

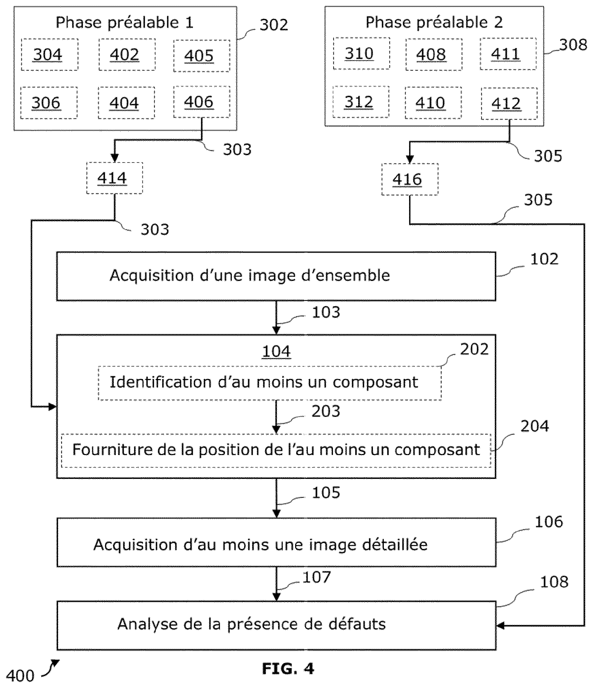

La FIGURE 4 est une représentation schématique d'un exemple de réalisation non limitatif d'un procédé 400 selon l'invention.

Le procédé 400 comprend toutes les étapes du procédé 300 illustré en FIGURE 3. Par conséquent, seules les différences avec le procédé 300 seront décrites.

La première phase préalable 302 et la deuxième phase préalable 308 peuvent comprendre la création du premier 303 et du deuxième modèle 305.

Ainsi, la première phase préalable 302 peut ensuite comprendre après l'étape d'enregistrement 306, une étape de répartition 402, de manière aléatoire, des images d'ensemble précédemment acquises en deux groupes d'images appelés base de données « composant » d'apprentissage et base de données « composant » de test. La base de données « composant » d'apprentissage et la base de données « composant » de test peuvent être comprises dans la base de données « composant » créée suite à l'étape d'enregistrement 306 de la première phase préalable 302. La base de données « composant » d'apprentissage est utilisée pour l'entrainement supervisé du premier modèle.

La première phase préalable 302 peut ensuite comprendre une étape d'identification 404 par un opérateur des composants présents sur les cartes électroniques des images d'ensemble appartenant à la base de données « composant » d'apprentissage. Cette étape est suivie d'une étape de regroupement 405 des composants identifiés dans différentes classes, appelées classes « composant ».

L'étape d'identification 404 et de regroupement 405 de la première phase préalable 302 permettent de classer les composants de carte électronique en différentes classes. A titre d'exemple non limitatif, les classes répertoriées peuvent être une classe microcontrôleur, une classe composant passif, une classe processeur de signal numérique.

La première phase préalable 302 comprend ensuite une étape de conception 406 du premier modèle 303 à partir des classes « composant » et d'une fonction coût. Ainsi la première phase préalable 302 peut fournir le premier modèle 303 utilisé dans l'étape d'analyse de l'image d'ensemble 103.

De la même manière, la deuxième phase préalable 308 peut ensuite comprendre une étape de répartition 408, de manière aléatoire, des images détaillées précédemment acquises en deux groupes d'images appelés base de données « défaut » d'apprentissage et base de données « défaut » de test. La base de données « défaut » d'apprentissage est utilisée pour l'entrainement supervisé du deuxième modèle.

La base de données « défaut » d'apprentissage et la base de données « défaut » de test peuvent être comprises dans la base de données « défaut » créée suite à l'étape d'enregistrement 312 de la deuxième phase préalable 308.

La deuxième phase préalable 308 peut ensuite comprendre une étape d'identification 410, par un opérateur, de défauts d'intérêts présents sur les composants des images détaillées appartenant à la base de données « défaut » d'apprentissage. Cette étape est suivie d'une étape de regroupement 411 des défauts identifiés dans différentes classes, appelées classes « défaut ».

L'étape de répartition 408 et l'étape de regroupement 411 de la deuxième phase préalable 308 permettent de classer des défauts de composants de carte électronique en différentes classes. A titre d'exemple non limitatif, les classes répertoriées peuvent être une classe pont, une classe brasures sèche, une classe défaut de surface, une classe polluant. De préférence, les classes se rapportant aux défauts des composants de carte électronique ne sont pas associées à un composant particulier. De ce fait, pour chaque composant identifié à l'étape d'identification 202, le procédé 400 vérifie si le composant comprend au moins un des défauts appartenant à l'une des classes de type « défaut ».

La deuxième phase préalable 308 peut ensuite comprendre une étape de conception 412 du deuxième modèle 305 à partir des classes de type « défaut » et d'une fonction coût. Ainsi la deuxième phase préalable 308 peut fournir le deuxième modèle 305 utilisé dans l'étape d'analyse de l'image détaillée 108.

A titre d'exemple non limitatif :

- la base de données « composant » d'apprentissage peut comprendre 100 images d'ensemble,
- la base de données « composant » de test peut comprendre 20 images d'ensemble,
- la base de données « défaut » d'apprentissage peut comprendre 500 images détaillées, et
- la base de données « défaut » de test peut comprendre 100 images détaillées.

Le premier modèle 303 et deuxième modèle 305 sont chacun un réseau de neurones supervisé. Ainsi, l'étape d'identification 404 de la première phase préalable 302 et l'étape d'identification 410 de la deuxième phase préalable 308 permettent de labéliser des zones d'intérêts en leur affectant un « tag » permettant de définir les classes de type « composant » comprenant les composants que le procédé selon l'invention doit identifier et les classes de type « défaut » comprenant les défauts que le procédé selon l'invention doit détecter sur les composants d'intérêts (i.e. les composants définis par les classes « composant »).

Suivant le procédé 300, chaque modèle (premier et deuxième modèle 303, 305) est vérifié après les étapes de conception 406, 412 du premier modèle 303 et du deuxième modèle 305 afin d'en évaluer les performances.

Ainsi, le procédé 400 peut comprendre préalablement aux étapes d'analyse 104, 108 une phase de vérification 414 du premier modèle 303 et une phase de vérification 416 du deuxième modèle 305. Les phases de vérification 414, 416 comprennent une étape de calcul de l'indice de Jaccard à partir des images appartenant aux bases de données de type « composant » de test et « défaut » de test. L'étape de calcul de l'indice de Jaccard dans la première phase préalable 302 est réalisée par un opérateur qui va exécuter le premier modèle 303 avec en entrée des images appartenant à la base de données « composant » de test. L'étape de calcul de l'indice de Jaccard dans la deuxième phase préalable 308 est réalisée par un opérateur qui va exécuter le deuxième modèle 305 avec en entrée des images appartenant à la base de données « défaut » de test.

Pour chaque indice de Jaccard calculé, les phases de vérification 414, 416 comprennent chacune une étape de calcul d'un facteur de détection, d'un facteur de non détection et d'un facteur de fausse alarme.

Le facteur de détection comprend les images pour lesquelles l'indice de Jaccard est supérieur à 0,5.

Le facteur de non détection comprend les images ayant un indice de Jaccard supérieur à zéro et inférieur ou égal à 0,5.

Le facteur de détection fausse alarme comprend les images pour lesquelles l'indice de Jaccard est égal à 0.

Les phases de vérification 414, 416 comprennent chacune une étape de calcul d'au moins une donnée de confiance pour chaque modèle. L'au moins une donnée de confiance est fonction du facteur de prédiction, de non détection et de fausse alarme.

A titre d'exemple non limitatif, deux données de confiance sont calculées sur chaque modèle. Les données de confiances sont :

- un facteur de sensibilité calculé suivant la formule Math. 1, et
- un facteur relatif à une valeur prédictive positive calculé suivant la formule Math. 2.

A titre d'exemple non limitatif, si le facteur de sensibilité et le facteur relatif à une valeur prédictive du premier modèle 303 sont supérieurs ou égaux à 70%, alors le premier modèle 303 crée dans la première phase préalable est fourni à l'étape d'analyse 104 de l'image d'ensemble 103.

A titre d'exemple non limitatif, si le facteur de sensibilité et le facteur relatif à une valeur prédictive du deuxième modèle 305 sont supérieurs ou égaux à 70%, alors le premier modèle 303 créé dans la deuxième phase préalable 308 est fourni à l'étape d'analyse 108 de l'image détaillée 107.

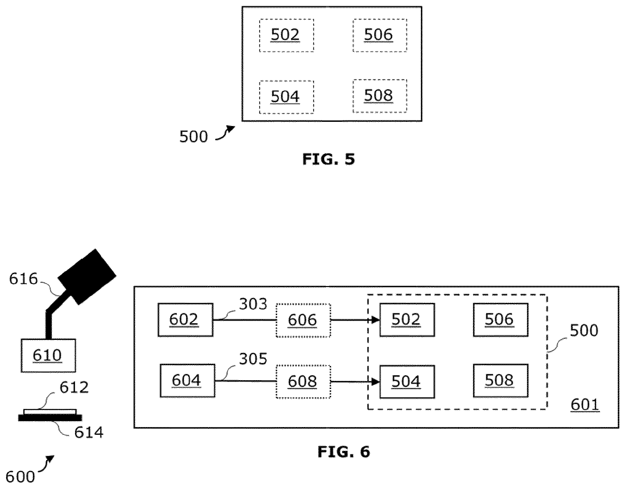

La FIGURE 5 est un exemple non limitatif d'un dispositif informatique 500 comprenant des moyens configurés pour mettre en œuvre toutes les étapes du procédé 100, 200, 300 ou 400.

Le dispositif 500 comprend :

- un module d'acquisition 502 agencé pour acquérir l'image d'ensemble 103 de la carte électronique,
- un module d'analyse 504, appelé premier module d'analyse 502, agencé pour analyser le premier modèle préalablement établi 303 ladite image d'ensemble 103 pour déterminer la position d'au moins un composant de ladite carte électronique se trouvant sur l'image d'ensemble.

Pour chaque position déterminée par le premier module d'analyse 504, le dispositif 500 comprend en outre :

- un module d'acquisition 506 de l'image détaillée 105 du composant se trouvant à la position déterminée par le premier module d'analyse 504,
- un module d'analyse 508, appelé deuxième module d'analyse, agencé pour déterminer, par le deuxième modèle 305 préalablement établi de l'image détaillée 105, la présence de défauts sur le composant déterminé à la première étape d'analyse 104.

Optionnellement, le premier module d'analyse est configuré pour mettre en œuvre l'étape d'identification 202 d'au moins un composant sur l'image d'ensemble et l'étape de fourniture 204 de la position de l'au moins un composant déterminé à l'étape d'identification 202.

La FIGURE 6 est un exemple non limitatif d'un équipement 600 pour la détection automatique de défauts sur des composants de carte électronique. L'équipement 600 comprend un dispositif 601 agencé pour mettre en œuvre toutes les étapes du procédé 100, 300, 400, 500. Le dispositif 601 comprend tous les éléments du dispositif 500.

Le dispositif 601 peut aussi comprendre un module de conception 602, appelé premier module de conception 602 pour concevoir le premier modèle et un autre module de conception 604, appelé deuxième module de conception 604 pour concevoir le deuxième modèle.

Chaque module de conception 602, 604 peut comprendre :

- un module d'acquisition configuré pour mettre en place l'étape d'acquisition 304, 310 d'une multitude d'images d'ensemble ou d'images détaillées de la première ou deuxième phases préalables 302, 308,
- un module d'enregistrement 306 ou 312 des images acquises par le moyen d'acquisition,
- un module de répartition configuré pour créer les bases de données de test et d'apprentissage suivant l'étape de répartition aléatoire 402 ou 408,
- un module d'identification configuré pour mettre en œuvre l'étape d'identification 404 ou 410,
- un module de regroupement configuré pour mettre en œuvre l'étape de regroupement 405 ou 411 (i.e. création des différentes classes de type « défaut » et de type « composant »),
- un module de création configuré pour concevoir le premier modèle ou le deuxième modèle à partir de la base de données identifiées en sortie du module d'identification et d'une fonction de coût suivant l'étape de conception 406 ou 412.

Ainsi, un réseau de neurones entrainé est fourni en sortie de chaque module de conception 602, 604. Ce réseau est ensuite envoyé au dispositif 500 pour mettre en œuvre les étapes d'acquisition 104, 106 de l'image d'ensemble 103 et de l'image détaillée 107 et les étapes d'analyse 104, 108 par le premier modèle 303 et deuxième modèle 305.

Optionnellement, le dispositif 601 comprend en outre deux modules de test. Chaque module de test est configuré pour tester le premier modèle ou le deuxième modèle avant de les utiliser dans le dispositif 500.

L'équipement 600 comprend en outre un moyen d'acquisition 610 agencé pour acquérir des images d'ensemble 103 de cartes électroniques 612 et des images détaillées 105 de différents composants appartenant auxdites cartes électroniques 612. Le moyen d'acquisition peut être une caméra ou un appareil photo.

Optionnellement l'équipement 600 comprend un support 614 de carte électronique pour positionner une carte électronique 612 qui va être vérifiée par l'un quelconque des procédés 100, 200, 300 ou 400.

En outre, à titre d'exemple non limitatif, le moyen d'acquisition 610 est mobile. Suivant cet exemple, l'équipement 600 peut comprendre un bras mobile 616, par exemple un bras robotisé 616, pour déplacer le moyen d'acquisition 610. Le bras robotisé 616 peut comprendre un moteur.

La carte électronique 612 vérifiée par l'équipement 600 ainsi que ses composants sont immobiles. La carte électronique 612 vérifiée est positionnée sur un support immobile 614 dudit équipement 600.

Le dispositif informatique 601 peut aussi comprendre un module de communication (non illustré) pour échanger, par exemple recevoir, des images du moyen d'acquisition 610. Le module de communication peut aussi communiquer des données avec une base de données externe audit dispositif 601. Par exemple, le dispositif 601 peut récupérer des images préenregistrées sur une base de données pour la conception du premier et deuxième modèle 303, 305. Le dispositif 601 peut aussi communiquer des résultats dudit procédé 100, 200, 300, 400 en fournissant les défauts présents avec leurs positions sur la carte électronique 612 à une base de données ou un serveur ou sous la forme d'un message affiché sur un écran relié audit équipement 600. Le module de communication peut aussi communiquer le fait qu'aucun défaut n'a été détecté sur la carte électronique 612.

Chaque module peut être un moyen de calcul, tel qu'un processeur, agencé pour exécuter le programme informatique selon l'invention ou des lignes de commandes dédiées à l'étape ou l'opération à réaliser du procédé 100, 200, 300, ou 400.

Bien que représentés séparément, au moins deux des modules, en particulier tous les modules, peuvent être intégrés dans un même processeur.

Le dispositif informatique 601 peut être un ordinateur. Cet ordinateur peut éventuellement être équipé de moyens de calculs spécialisés, par exemple d'un microprocesseur dédié au calcul d'images du type « GPU » et/ou d'un microprocesseur dédié aux circuits neuronaux du type « TPU ».

Le dispositif 601 (et 500) est agencé pour exécuter des instructions d'un programme informatique pour mettre en œuvre toutes les étapes du procédé tel que décrit dans les FIGURES 1, 2, 3, et 4.

**Revendications**

**1.** Procédé (100, 200, 300, 400) pour la détection automatique de défauts sur des composants d'une carte électronique, ledit procédé (100, 200, 300, 400) comprenant les étapes suivantes :

- acquisition (102) d'au moins une image (103), de manière à former une image dite d'ensemble, de ladite carte électronique, ladite image d'ensemble (103) comprenant au moins un composant de ladite carte, et
- analyse (104), par un premier modèle (303) préalablement établi, de ladite image d'ensemble (103) pour déterminer une position d'au moins un composant de ladite carte électronique se trouvant sur ladite image d'ensemble (103) ;

et pour au moins une position déterminée (105) :

◦ acquisition (106) d'au moins une image (107), dite image détaillée, dudit composant se trouvant à ladite position (105), et
◦ analyse (108), par un deuxième modèle (305) préalablement établi, de ladite image détaillée (107) pour déterminer la présence de défauts sur ledit composant ;

**caractérisé en ce que**

- le premier modèle (303) préalablement établi comprend un réseau de neurones entrainé de manière supervisée avec une base de données, dite base de données de composants d'apprentissage, comprenant des images de composants appartenant à des cartes électroniques, ledit premier modèle (303) prenant en entrée l'image d'ensemble (103), et
- le deuxième modèle (305) préalablement établi comprend un réseau de neurones entrainé de manière supervisée avec une base de données, dite base de données défauts d'apprentissage, comprenant des images de défauts préalablement répertoriés de composants, ledit deuxième modèle (305) prenant en entrée une position d'au moins un composant.

2. Procédé (100, 200, 300, 400) selon la revendication 1, dans lequel l'étape d'analyse (104) par le premier modèle (303) comprend :

- une étape d'identification (202) d'au moins un composant de ladite carte électronique, et,
- pour chaque composant identifié, une étape de fourniture (204) de l'au moins une position (105) dudit composant.

3. Procédé (100, 200, 300, 400) selon la revendication 1 ou 2, dans lequel l'image d'ensemble (103) est une image de ladite carte électronique en entier ou une image d'une partie de ladite carte électronique.

4. Procédé (100, 200, 300, 400) selon l'une quelconque des revendications précédentes, dans lequel l'image détaillée (107) est une image de l'au moins un composant en entier ou une image d'une partie de l'au moins un composant.

5. Procédé (100, 200, 300, 400) selon l'une quelconque des revendications précédentes, dans lequel la position (105) d'au moins un composant comprend la position d'un microcontrôleur, et/ou la position d'un composant passif, et/ou la position d'un processeur de signal numérique présent(s) sur ladite carte électronique.

6. Procédé (100, 200, 300, 400) selon l'une quelconque des revendications précédentes, dans lequel l'étape d'analyse (108) par le deuxième modèle (305) est agencée pour détecter des défauts, par exemple parmi des ponts, des brasures sèches, des défauts de surface, des polluants, et/ou leur acceptabilité, sur l'au moins un composant de ladite carte électronique.

7. Procédé (100, 200, 300, 400) selon l'une quelconque des revendications précédentes, dans lequel la position (105) de l'au moins un composant comprend des coordonnées cartésiennes de l'au moins un composant.

8. Procédé (300, 400) selon l'une quelconque des revendications précédentes, comprenant une phase préalable (302), dite première phase préalable, réalisée avant à ladite étape d'acquisition (102) de l'image d'ensemble (103), comprenant des étapes suivantes :

- acquisition (304) d'une multitude d'images d'ensemble de cartes électroniques comprenant au moins un composant,
- enregistrement (306) desdites images d'ensemble sur une base de données.

9. Procédé (300, 400) selon l'une quelconque des revendications précédentes, comprenant une phase préalable (308), dite deuxième phase préalable, réalisée avant l'acquisition (106) de ladite image détaillée (105), comprenant des étapes suivantes :

- acquisition (310) d'une multitude d'images détaillées sur des cartes électroniques,
- enregistrement (312) desdites images détaillées sur une base de données.

10. Programme informatique comprenant des instructions exécutables par un dispositif informatique, qui lorsqu'elles sont exécutées, mettent en œuvre toutes les étapes du procédé (100, 200, 300, 400) selon l'une quelconque des revendications précédentes.

11. Dispositif informatique (500, 601) comprenant des moyens configurés pour mettre en œuvre toutes les étapes du procédé (100, 200, 300, 400) selon l'une quelconque des revendications 1 à 9.

12. Equipement (600) pour la détection automatique de défauts sur des composants d'une carte électronique, **caractérisé en ce qu'**il comprend :

- un dispositif informatique (500, 601) comprenant des moyens configurés pour mettre en œuvre toutes les étapes du procédé (100, 200, 300, 400) selon l'une quelconque des revendications 1 à 9,
- au moins un moyen d'acquisition (610) agencé pour acquérir des images de ladite carte électronique et/ou des composants appartenant à ladite carte électronique.

13. Equipement (600) selon la revendication précédente, dans lequel le moyen d'acquisition (610) est mobile et/ou dans lequel la carte électronique est immobile et/ou dans lequel l'au moins un composant de ladite carte électronique est immobile.

**Patentansprüche**

1. Verfahren (100, 200, 300, 400) zur automatischen Erkennung von Fehlern an Komponenten einer Elektronikplatine, wobei das Verfahren (100, 200, 300, 400) die folgenden Schritte umfasst:

   - Erfassung (102) mindestens eines Bildes (103) von der Elektronikplatine, um ein so genanntes Gesamtbild zu bilden, wobei das Gesamtbild (103) mindestens eine Komponente der Platine umfasst, und
   - Analyse (104), mittels eines ersten vorab erstellten Modells (303), des Gesamtbildes (103) zum Bestimmen einer Position mindestens einer Komponente der Elektronikplatine, die sich auf dem Gesamtbild (103) befindet; und für mindestens eine bestimmte Position (105):

     ◦ Erfassung (106) mindestens eines Bildes (107), des so genannten Detailbildes, der sich in dieser Position (105) befindlichen Komponente, und
     ◦ Analyse (108), mittels eines zweiten vorab erstellten Modells (305), des Detailbildes (107) zum Bestimmen des Vorhandenseins von Fehlern an der Komponente;

   **dadurch gekennzeichnet, dass**
   - das erste vorab erstellte Modell (303) ein neuronales Netzwerk umfasst, das unter Überwachung mit einer Datenbank, der so genannten Komponenten-Lerndatenbank, trainiert wurde, die Bilder von Komponenten umfasst, die zu Elektronikplatinen gehören, wobei das erste Modell (303) das Gesamtbild (103) als Eingabe nimmt, und
   - das zweite vorab erstellte Modell (305) ein neuronales Netzwerk umfasst, das unter Überwachung mit einer Datenbank, der so genannten Fehler-Lerndatenbank, trainiert wurde, die Bilder von zuvor erfassten Fehlern von Komponenten umfasst, wobei das zweite Modell (305) eine Position von mindestens einer Komponente als Eingabe nimmt.

2. Verfahren (100, 200, 300, 400) nach Anspruch 1, wobei der Schritt der Analyse (104) durch das erste Modell (303) umfasst:

   - einen Identifikationsschritt (202) mindestens einer Komponente der Elektronikplatine, und,
   - für jede identifizierte Komponente, einen Schritt der Bereitstellung (204) der mindestens einen Position (105) der Komponente.

3. Verfahren (100, 200, 300, 400) nach Anspruch 1 oder 2, wobei das Gesamtbild (103) ein Bild der Elektronikplatine als Ganzes oder ein Bild eines Teils der Elektronikplatine ist.

4. Verfahren (100, 200, 300, 400) nach einem der vorstehenden Ansprüche, wobei das Detailbild (107) ein Bild der mindestens einen Komponente als Ganzes oder ein Bild eines Teils der mindestens einen Komponente ist.

5. Verfahren (100, 200, 300, 400) nach einem der vorstehenden Ansprüche, wobei die Position (105) mindestens einer Komponente die Position eines Mikrocontrollers und/oder die Position einer passiven Komponente und/oder die Position eines digitalen Signalprozessors, der/die sich auf der Elektronikplatine befindet/befinden, umfasst.

6. Verfahren (100, 200, 300, 400) nach einem der vorstehenden Ansprüche, wobei der Schritt der Analyse (108) durch das zweite Modell (305) dazu eingerichtet ist, Fehler, beispielsweise wie Brücken, trockene Lötstellen, Oberflächendefekte, Verunreinigungen und/oder deren Annehmbarkeit, an der mindestens einen Komponente der Elektronikplatine zu erkennen.

7. Verfahren (100, 200, 300, 400) nach einem der vorstehenden Ansprüche, wobei die Position (105) der mindestens einen Komponente kartesische Koordinaten der mindestens einen Komponente umfasst.

8. Verfahren (300, 400) nach einem der vorstehenden Ansprüche, umfassend eine Vorab-Phase (302), die so genannte erste Vorab-Phase, die vor dem genannten Schritt der Erfassung (102) des Gesamtbildes (103) durchgeführt wird, umfassend die folgenden Schritte:

- Erfassung (304) einer Vielzahl von Gesamtbildern von Elektronikplatinen, die mindestens eine Komponente umfassen,
- Speicherung (306) der Gesamtbilder in einer Datenbank.

9. Verfahren (300, 400) nach einem der vorstehenden Ansprüche, umfassend eine Vorab-Phase (308), die so genannte zweite Vorab-Phase, die vor der Erfassung (106) des Detailbildes (105) durchgeführt wird, umfassend die folgenden Schritte:

- Erfassung (310) einer Vielzahl von Detailbildern auf Elektronikplatinen,
- Speicherung (312) der Detailbilder in einer Datenbank.

10. Computerprogramm, umfassend Anweisungen, die durch eine Computervorrichtung ausführbar sind, die, wenn sie ausgeführt werden, alle Schritte des Verfahrens (100, 200, 300, 400) nach einem der vorstehenden Ansprüche implementieren.

11. Computervorrichtung (500, 601), umfassend Mittel, die zum Implementieren aller Schritte des Verfahrens (100, 200, 300, 400) gemäß einem der Ansprüche 1 bis 9 konfiguriert sind.

12. Ausrüstung (600) zur automatischen Erkennung von Fehlern an Komponenten einer Elektronikplatine, **dadurch gekennzeichnet, dass** sie umfasst:

- eine Computervorrichtung (500, 601), umfassend Mittel, die dazu konfiguriert sind, alle Schritte des Verfahrens (100, 200, 300, 400) nach einem der Ansprüche 1 bis 9 zu implementieren,
- mindestens ein Erfassungsmittel (610), das dazu eingerichtet ist, Bilder von der Elektronikplatine und/oder von Komponenten, die zu der Elektronikplatine gehören, zu erfassen.

13. Ausrüstung (600) nach dem vorstehenden Anspruch, wobei das Erfassungsmittel (610) beweglich ist und/oder wobei die Elektronikplatine unbeweglich ist und/oder wobei die mindestens eine Komponente der Elektronikplatine unbeweglich ist.

## Claims

1. A method (100, 200, 300, 400) for automatically detecting defects on components of an electronic board, said method (100, 200, 300, 400) comprising the following steps:

- acquisition (102) of at least one image (103), so as to form a so-called overall image, of said electronic board, said overall image (103) comprising at least one component of said board, and
- analysis (104), by a previously established first model (303), of said overall image (103) to determine a position of at least one component of said electronic board located on said overall image (103);
and for at least one determined position (105):

 ◦ acquisition (106) of at least one image (107), referred to as a detailed image, of said component located at said position (105), and
 ◦ analysis (108), by a previously established second model (305), of said detailed image (107) to determine the presence of defects on said component;

**characterized in that**
- the previously established first model (303) comprises a neural network trained in a supervised manner with a database, the so-called training component database, comprising images of components belonging to electronic boards, said first model (303) taking the overall image (103) as input, and
- the previously established second model (305) comprises a neural network trained in a supervised manner with a database, the so-called training defect database, comprising images of previously cataloged defects of components, said second model (305) taking a position of at least one component as input.

2. The method (100, 200, 300, 400) according to claim 1, wherein the analysis step (104) by the first model (303) comprises:

- an identification step (202) of at least one component of said electronic board, and,
- for each identified component, a step (204) of providing the at least one position (105) of said component.

3. The method (100, 200, 300, 400) according to claim 1 or 2, wherein the overall image (103) is an image of said electronic board as a whole or an image of a part of said electronic board.

4. The method (100, 200, 300, 400) according to any of the preceding claims, wherein the detailed image (107) is an image of the at least one component as a whole or an image of a part of the at least one component.

5. The method (100, 200, 300, 400) according to any of the preceding claims, wherein the position (105) of at least one component comprises the position of a microcontroller, and/or the position of a passive component, and/or the position of a digital signal processor present on said electronic board.

6. The method (100, 200, 300, 400) according to any of the preceding claims, wherein the analysis step (108) by the second model (305) is arranged to detect defects, for example among bridges, dry solder joints, surface defects, pollutants, and/or their acceptability, on the at least one component of said electronic board.

7. The method (100, 200, 300, 400) according to any of the preceding claims, wherein the position (105) of the at least one component comprises Cartesian coordinates of the at least one component.

8. The method (300, 400) according to any of the preceding claims, comprising a preliminary phase (302), referred to as the first preliminary phase, carried out prior to said step (102) of acquiring the overall image (103), comprising the following steps:

    - acquisition (304) of a multitude of overall images of electronic boards comprising at least one component,
    - storage (306) of said overall images on a database.

9. The method (300, 400) according to any of the preceding claims, comprising a preliminary phase (308), referred to as the second preliminary phase, carried out prior to the acquisition (106) of said detailed image (105), comprising the following steps:

    - acquisition (310) of a multitude of detailed images on electronic boards,
    - storage (312) of said detailed images on a database.

10. A computer program comprising instructions executable by a computer device which, when they are executed, implement all the steps of the method (100, 200, 300, 400) according to any of the preceding claims.

11. A computer device (500, 601) comprising means configured to implement all the steps of the method (100, 200, 300, 400) according to any of claims 1 to 9.

12. Equipment (600) for automatically detecting defects on components of an electronic board, **characterized in that** it comprises:

    - a computer device (500, 601) comprising means configured to implement all the steps of the method (100, 200, 300, 400) according to any of claims 1 to 9,
    - at least one acquisition means (610) arranged to acquire images of said electronic board and/or components belonging to said electronic board.

13. The equipment (600) according to the preceding claim, wherein the acquisition means (610) is mobile and/or wherein the electronic board is immobile and/or wherein the at least one component of said electronic board is immobile.

Acquisition d'une image d'ensemble — 102

↓ — 103

Analyse de l'image d'ensemble — 104

↓ — 105

Acquisition d'au moins une image détaillée — 106

↓ — 107

Analyse de la présence de défauts — 108

100 ⤴

**FIG. 1**

Acquisition d'une image d'ensemble — 102

↓ — 103

104 — 202

Identification d'au moins un composant

↓ — 203

Fourniture de la position de l'au moins un composant — 204

↓ — 105

Acquisition d'au moins une image détaillée — 106

↓ — 107

Analyse de la présence de défauts — 108

200 ⤴

**FIG. 2**

Phase préalable 1

304

306

302

303

Phase préalable 2

310

312

308

305

Acquisition d'une image d'ensemble

102

103

104

Identification d'au moins un composant

202

203

Fourniture de la position de l'au moins un composant

204

105

Acquisition d'au moins une image détaillée

106

107

108

Analyse de la présence de défauts

300

**FIG. 3**

Phase préalable 1 — 302

| 304 | 402 | 405 |
| 306 | 404 | 406 |

Phase préalable 2 — 308

| 310 | 408 | 411 |
| 312 | 410 | 412 |

303

414

305

416

303

305

Acquisition d'une image d'ensemble — 102

103

**104** — 202

Identification d'au moins un composant

203

Fourniture de la position de l'au moins un composant — 204

105

Acquisition d'au moins une image détaillée — 106

107

108

Analyse de la présence de défauts

400 ⟋

**FIG. 4**

FIG. 5

FIG. 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20180276811 A1

**Littérature non-brevet citée dans la description**

- **CHEONG LEONG KEAN et al.** *Defects and Components Recognition in Printed Circuit Boards Using Convolutional Neural Network*